**Europäisches Patentamt**

**European Patent Office**

**Office européen des brevets**

(19)

(11) Veröffentlichungsnummer: **0 187 901**
**B1**

(12) ## EUROPÄISCHE PATENTSCHRIFT

(45) Veröffentlichungstag der Patentschrift:
**05.07.89**

(51) Int. Cl.⁴: **B 60 T 13/66**

(21) Anmeldenummer: **85113486.6**

(22) Anmeldetag: **24.10.85**

(54) **Elektrisch gesteuerte Bremsanlage für Fahrzeuge.**

(30) Priorität: **16.01.85 DE 3501179**

(43) Veröffentlichungstag der Anmeldung:
**23.07.86 Patentblatt 86/30**

(45) Bekanntmachung des Hinweises auf die Patenterteilung:
**05.07.89 Patentblatt 89/27**

(84) Benannte Vertragsstaaten:
**DE FR GB IT SE**

(56) Entgegenhaltungen:
**EP-A- 0 103 716**
**EP-A- 0 110 119**
**DE-A- 3 212 930**
**GB-A- 2 131 508**

(73) Patentinhaber: **WABCO Westinghouse**
**Fahrzeugbremsen GmbH, Am Lindener**
**Hafen 21 Postfach 91 12 80, D-3000 Hannover 91 (DE)**

(72) Erfinder: **Petersen, Erwin, Dr.-Ing., Fliederweg 22,**
**D-3050 Wunstorf 1 (DE)**

(74) Vertreter: **Schrödter, Manfred, WABCO Westinghouse**
**Fahrzeugbremsen GmbH Am Lindener**
**Hafen 21 Postfach 91 12 80, D-3000 Hannover 91 (DE)**

## Beschreibung

Die Erfindung bezieht sich auf eine elektrische Bremsanlage gemäss dem Oberbegriff des Patentanspruchs 1. Derartige Anlagen sind z.B. aus der DE-A 3 337 800 oder der DE-A 3 230 971 bekannt.

Bei einer elektrischen Bremsanlage, insbesondere für Nutzfahrzeuge, werden die Bremszylinder durch ein Druckmittel, meist Druckluft, betätigt. Die Steuerung des Bremsdruckes erfolgt hier jedoch nicht mittels eines von einem Trittplatten-Bremsventil abgestuften Steuerdruckes. Statt dessen ist das Bremspedal mit einem elektrischen Sollwertgeber, beispielsweise einem Potentiometer, versehen. Das Ausgangssignal des Gebers wird einer Elektronik zugeleitet. Hier wird das Signal durch zusätzliche Einrichtungen modifiziert, die zum Beispiel lastabhängig (ALB, automatisch lastabhängige Bremse), radschlupfabhängig (ABS, Antiblockiersystem) und/oder in Abstimmung mit Zusatzbremsen (Retarder) arbeiten können.

Das resultierende Bremssignal wird auf Magnetventile (Modulatoren) geleitet, welche die Zufuhr des Druckmittels zu den Bremszylindern steuern. Ein solches Magnetventil kann nach verschiedenen Prinzipien (digital oder analog) aufgebaut sein. Anstelle einer blossen Steuerung kann der Bremsdruck auch auf einen Sollwert eingeregelt werden. In diesem Fall wird im allgemeinen der Ist-Druck von einem Drucksensor überwacht und rückgemeldet.

Elektrische Bremsanlagen haben den Vorteil, eine besonders genau dosierbare und schnelle Bremsung zu ermöglichen. Weiter lässt sich auch die bisher vorhandene Hysterese des Trittplatten-Bremsventils und sonstiger Steuerventile (ALB u.a.) eliminieren.

An Bremsanlagen sind naturgemäss besonders hohe Sicherheitsanforderungen zu stellen. So ist zum Beispiel in internationalen Regelwerken sinngemäss vorgeschrieben, dass auch bei einem Fehler in der Elektrik, der Elektronik oder eines Modulators einer elektronisch gesteurerten Betriebsbremsanlage eines Strassenfahrzeugs noch eine eingeschränkte, sogenannte Hilfs- oder Rest-Bremswirkung erzielt werden kann. Dazu bedarf es eines mindestens zweikreisigen Aufbaus der Betriebsbremsanlage.

Alternativ zu einer zweikreisigen Elektronik und elektrischen Spannungsversorgung ist es z.B. in Analogie zu hydraulischen Verstärkerbremsanlagen, wie sie in USA gebräuchlich oder auch in DE-A 2 065 815 und DE-C 2 062 533 beschrieben sind – naheliegend, eine pneumatische Redundanz zu einer einkreisigen Elektronik und Spannungsversorgung vorzusehen. Dazu ist mit dem Bremspedal neben dem elektrischen Sollwertgeber auch ein übliches Druck-Abstufungsventil zu betätigen. Mit dem abgestuften Druck werden bei Gesamtausfall der Elektronik bzw. Elektrik die Bremszylinder direkt über Wegventile (DE-A 3 230 970) oder indirekt über geeignete Modulatoren (DE-A 3 230 971) angesteuert. Hierdurch können auch im Fehlerfall die Radbremsen noch rein pneumatisch betätigt werden. Nachteilig an diesen Lösungen ist, dass der im Normalfall inaktive pneumatische Kreis durch mindestens einen zusätzlichen Drucksensor überwacht werden muss (DE-A 3 337 800).

Der Erfindung liegt die Aufgabe zugrunde, eine elektrische Bremssteuerung der eingangs genannten Art anzugeben, die zusätzlich mit einer vorteilhaften und kostengünstigen redundanten pneumatischen Steuerung versehen ist.

Diese Aufgabe wird durch die im Patentanspruch 1 enthaltene Erfindung gelöst. Die Unteransprüche enthalten zweckmässige Weiterbildungen der Erfindung.

Bei der erfindungsgemässen elektrischen Bremsanlage wirkt der redundante Druck des Trittplatten-Ventils unmittelbar auf die Entlüftungsanschlüsse der Vorsteuer- und/oder Hauptventile der Druckmodulatoren. Hierdurch können diese gegenüber den um eine bestimmte, relative oder absolute Druckdifferenz $\Delta P$ (z.B. 1 bar) niedrigeren redundanten Druck entlüftet werden. Durch diese Massnahme ist infolge der verlangsamten Entlüftung trotz grosser Nennweite des Modulator-Entlüftungsventils eine verbesserte Regelgüte bei feinstufigen Teilbremsungen zu erzielen.

Die Erfindung wird im folgenden anhand einer Zeichnung näher erläutert. Die Zeichnung zeigt in schematischer Darstellung die wesentlichsten Teile der erfindungsgemässen Bremsanlage. In

Fig. 1 ist das Grundschema, und in

Fig. 2 eine Ausführung mit einem Antiblockiersystem dargestellt. Die

Fig. 3 bis 6 zeigen spezielle Ausführungen des in der Bremsanlage vorgesehenen Druck-Modulators.

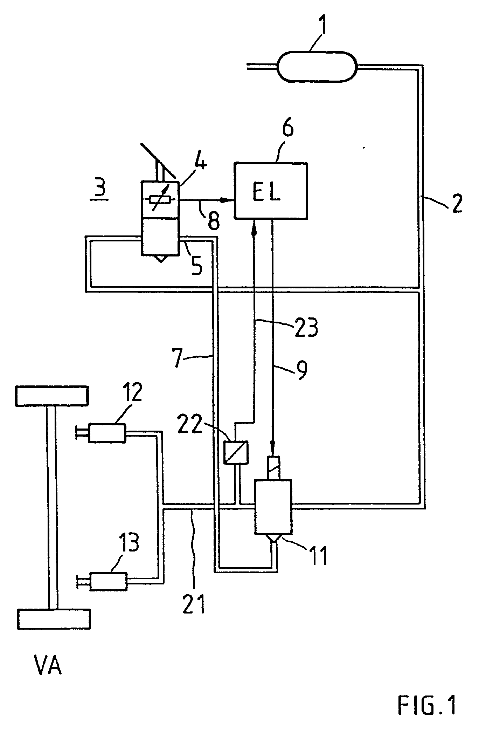

In Fig. 1 ist mit 1 ein Druckluft-Vorrat eines Nutzfahrzeuges bezeichnet. Der Vorrat ist über eine Leitung 2 an ein Trittplattenventil 5 und an ein Magnetventil (Modulator) 10 angeschlossen. Das Trittplattenventil 5 gehört zu einem Bremswertgeber 3. Dieser ist zusätzlich mit einem elektrischen Sollwertgeber 4 ausgerüstet, der über eine Leitung 8 mit einer Elektronik 6 verbunden ist. Eine oder mehrere Ausgansleitungen 9 der Elektronik 6 ist/sind an eine oder mehrere Betätigungsspulen des Magnetventils 10 angeschlossen.

Der Ausgangsanschluss des Trittplattenventils 5 ist über eine Leitung 7 an den Entlüftungsanschluss 11 des Magnetventils 10 angeschlossen. Der Ausgang des Magnetventils 10 ist über eine Leitung 21 an die Bremszylinder 12, 13 eines Bremskreises (hier die Vorderachse VA) sowie an einen Drucksensor 22 angeschlossen. Letzterer ist über eine Leitung 23 mit der Elektronik 6 verbunden. Er kann in das Magnetventil 10 (Modulator) integriert sein.

Die beschriebene Anlage funktioniert wie folgt.

Bei Bremsbetätigung gibt der elektrische Sollwertgeber 4 ein Signal an die Elektronik 6 ab. Dieses Signal wird in der Elektronik verarbeitet.

Eventuell werden hier Signale anderer, nicht dargestellter Einrichtungen, wie z.B. ALB, ABS oder Retarder hinzugefügt und logisch verknüpft. Mit dem resultierenden Ausgangssignal wird das Magnetventil 10 entsprechend der Bremsbetätigung angesteuert. Mit dem so eingestellten Ausgangsdruck auf der Leitung 21 werden die Bremszylinder 12, 13 betätigt.

Der Drucksensor 22 meldet den Bremsdruck der Elektronik 6 zurück und schliesst so den elektro-pneumatischen Regelkreis.

Ist das Magnetventil 10 z.B. ein Proportionalventil, dann ist der Drucksensor 22 ggf. nicht notwendig zur Darstellung des Grundregelkreises. Er kann dann zu dessen Überwachung oder Verbesserung der Regelgüte dienen.

Im Bremswertgeber 3 wird gleichzeitig durch ein Trittplattenventil 5 ein wie üblich abgestufter Bremsdruck erzeugt. Dieser wird auf die Entlüftung 11 des Magnetventils 10 geleitet. Beim Steigern und beim Konstanthalten des Bremsdruckes wird dadurch das dann entlüftungsseitig geschlossene Magnetventil 10 nicht beeinflusst. Wird jedoch vom Fahrer der Bremssollwert gesenkt, dann entlüftet das Magnetventil 10 über die Leitung 7 und den Entlüftungsanschluss des Trittplattenventils 5.

Die Druckverhältnisse sind so eingestellt, dass der Ausgangsdruck des Ventils 5 auf der Leitung 7 beispielsweise um etwa 1 bar niedriger liegt als der Ausgangsdruck des Magnetventils 10 auf der Leitung 21. Durch die so gedrosselte Entlüftung des Magnetventils 10 wird ein sanfteres Bremslösen bewirkt.

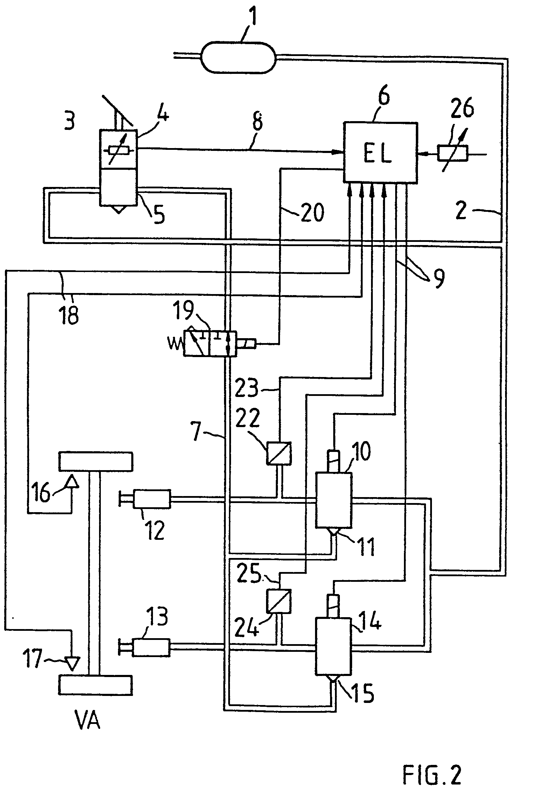

In der Fig. 2 ist eine Bremsanlage dargestellt, die zusätzlich ein Antiblockiersystem (ABS) enthält. Hierzu werden der Elektronik 6 in bekannter Weise über Radsensoren 16, 17 Signale über die Radgeschwindigkeiten zugeführt. Um die beiden Räder eines Bremskreises VA) einzeln geregelt bremsen zu können, sind hier zwei Magnetventile 10, 14 vorgesehen, deren Druckeingänge über die Leitung 2 an den Druckluftvorrat 1 angeschlossen sind. Die Magnetventile 10, 14 sind über Leitungen 9 von der Elektronik 6 ansteuerbar. Der angesteuerte Bremsdruck wird von Drucksensoren 22, 24 gemessen und der Elektronik über Leitungen 23, 25 mitgeteilt.

Im Unterschied zur Anlage nach der Fig. 1 ist in die den beiden Magnetventilen 10, 14 gemeinsame Entlüftungsleitung 7 ein Absperrventil 19 eingefügt, das über eine Leitung 20 von der elektronik 6 ansteuerbar ist. Das Absperrventil 19 ist als Magnetventil ausgebildet und normalerweise auf Durchgang geschaltet. Nur im Sonderfall, wie einer ABS-geregelten Bremsung, wird das Absperrventil 19 durch ein Signal der Elektronik 6 umgesteuert. Hierdurch erfolgt dann die Entlüftung der Magnetventile 10, 14 nicht über das Trittplattenventils 5, sondern direkt ins Freie. Damit sind die bei der geregelten Bremsung erforderlichen schnellen Entlüftungsvorgänge bis unter den vom Fahrer vorgegebenen Drucksollwert gewährleistet.

Das Absperrventil 19 kann auch dann umgesteuert werden, wenn wegen überlagerter Retarderbremswirkung die Betriebsbremswirkung zurückgehalten werden soll oder wenn der Fahrer die Bremse besonders schnell lösen will. Dies wird dann von der Elektronik 6 erkannt und das Absperrventil 19 über die Leitung 20 gegebenenfalls auf Entlüftung geschaltet.

Ebenso kann das Absperrventil 19 dann umgesteuert werden, wenn der Bremsdruck bei un- oder teilbeladenem Fahrzeug entsprechend einem von einem Sensor 26 gelieferten Achslastwert gegenüber dem vom Fahrer vorgegebenen Bremssollwert reduziert werden soll.

Besonders für ALB-Regelungen mit Knick-Charakteristik kann es vorteilhaft sein, das 3/2-Wege-Absperrventil 19 in an sich bekannter Weise durch ein 2/2-Wege-Halteventil und ein 2/2-Wege-Entlüftungsventil zu ersetzen (nicht dargestellt). Dann braucht nur das Halteventil angesteuert zu werden, sobald der von dem Trittplattenventil 5 eingesteuerte redundante Druck den ALB-geregelten Druck erreichen und überschreiten würde. Das ist nur bei einer relativ geringen Anzahl von Bremsbetätigungen der Fall. Eine derartige Anordnung reduziert den Luftverbrauch und die Magnetbetätigungen für das Absperrventil 19.

Falls die elektrische Spannungsversorgung, die Elektrik, die Elektronik 6 oder die Magnetventile 10, 14 durch einen Fehler ausfallen sollten, so dass letztere nicht mehr elektrisch gesteuert werden können, wird durch die erfindungsgemässe Anordnung trotzdem eine Bremsung durch den von dem Trittplattenventil 5 erzeugten redundanten pneumatischen Druck ermöglicht. Dieser geht über die Leitung 7 und die Entlüftungen 11, 15 der Magnetventile 10, 14 direkt auf die Bremszylinder 12, 13.

Erfindungsgemäss ist die Luftführung des redundanten Druckes durch die Magnetventile 10, 14 zu den Bremswegzylindern 12, 13 und zu den Drucksensoren 22, 24 so ausgebildet, dass die Drucksensoren sowohl zur eigentlichen elektropneumatischen Bremsdruckregelung als auch zur Überwachung des redundanten Pneumatik-Kreises (Leitung 7) herangezogen werden können. Letzteres erfolgt mittels geeigneter Testroutinen durch die Elektronik 6.

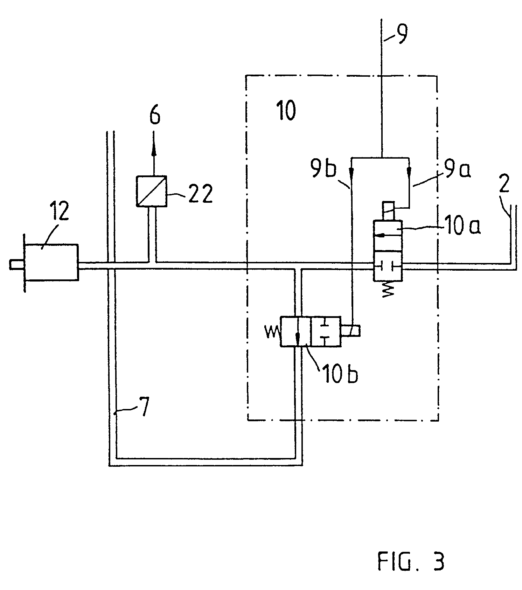

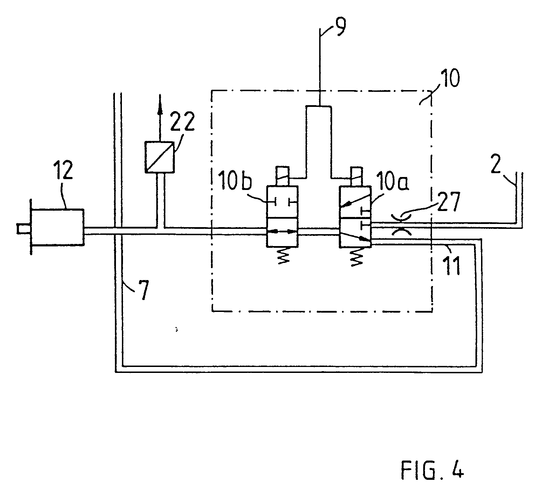

Die Fig. 3 und 4 als Ausschnitte der Fig. 1, 2 zeigen zwei beispielhafte Ausführungen des Magnetventils 10 mit direktsteuernden 2/2- bzw. 3/2-Wege-Magnetventilen 10a, 10b.

Gemäss der Fig. 3 besteht das in den Fig. 1, 2 als eine Einheit dargestellte Magnetventil 10 (Modulator) aus zwei 2/2-Wege-Magnetventilen 10a, 10b. Die Ventile 10a, 10b werden durch die Elektronik 6 über Leitungen 9, 9a, 9b angesteuert. Das Ventil 10a sperrt nichtangesteurt den Vorratsdruck in Leitung 2 ab. Das Ventil 10b entlüftet nichtangesteuert den Bremszylinder 12 in die Leitung 7. Eine Bremsdruckerhöhung erfolgt durch dauerndes Umsteuern des Auslassventils 10b in die geschlossene Stellung und – je nach Bauweise des Ventils 10a – durch dauerndes oder getaktetes Ansteuern des Einlassventils 10a in die geöffnete Stellung. Das Umsteuern nur des Auslassventils 10b führt zum Druckhalten. Sinngemäss erfolgt eine Drucksenkung durch Nichtansteuern beider Ventile. Wie zuvor beschrieben, erfolgt die Drucksenkung auch bei dauernd offenem Auslassventil 10b mit geringem Gradienten, sofern über das Trittplattenventil 5 und die Leitung 7 ein Gegendruck am Anschluss 11 anliegt.

Entspricht der Gegendruck dem Atmosphärendruck, tritt ein steilerer Entlüftungsgradient auf. Das ist der Fall, wenn durch die Elektronik 6 das in Fig. 2 dargestellte Absperrventil 19 umgeschaltet oder der redundante Pneumatikkreis durch einen Fehler – beispielsweise in dem Trittplattenventil 5, der Leitung 7 oder dem Absperrventil 19 – ausgefallen ist.

Erfindungsgemäss wird dieser Sachverhalt zur Überwachung des redundanten pneumatischen Kreises wie folgt ausgenutzt. Wie von Anti-Blokkier-Systemen bekannt, führt die Elektronik 6 bei Fahrtantritt und während der Fahrt Testroutinen durch zur Überprüfung des elektro-pneumatischen Bremssystems. Diese werden zur Überwachung des redundanten Kreises erweitert. Bei vom Fahrer durch Betätigen des Bremswertgebers eingeleiteten Bremsproben bei Fahrtantritt und bei Teilbremsungen werden in gezielten Testroutinen trotz Sollwertvorgabe die Magnetventile 10a, 10b kurzzeitig nicht angesteuert. Dadurch gelangt der um einen der Elektronik bekannten Differenzdruck, z. B. 1 bar, geringere redundante Druck des Trittplattenventils 5 in die Bremszylinder 12, 13 und an den Drucksensor 22. Meldet der Drucksensor 22 der Elektronik 6 einen dem Sollwert entsprechenden «richtigen» redundanten Druck, wird das Testergebnis als ordnungsgemäss erkannt. Andernfalls erfolgt eine Testwiederholung und/oder Fehleranzeige.

Zusätzlich kann innerhalb der Testroutine auch das Absperrventil 19 kurzzeitig betätigt werden. Ordnungsgemäss muss die Elektronik 6 dann eine entsprechende weitere Drucksenkung und nachfolgende Druckerhöhung des redundanten Druckes erkennen.

Weiterhin erfolgt eine Überprüfung bei Bremslösevorgängen dadurch, dass ausgelöst durch eine weitere Testroutine das Absperrventil 19 kurzzeitig oder längerdauernd umgeschaltet wird, und der sich dadurch ergebende geänderte (erhöhte) Entlüftungsgradient von der Elektronik 6 erkannt wird.

Gemäss der Fig. 4 besteht das Magnetventil 10 (Modulator) aus einem 3/2-Wege-Umschaltventil 10a und einem nachfolgenden Halteventil 10b. Eine Erhöhung des Bremsdruckes erfolgt durch Umsteuern des Ventils 10a. Eine Verringerung erfolgt in der gezeichneten Stellung. Ein Druckhalten erfolgt durch Umsteuern des Halteventils 10b. Zur Begrenzung des Druckgradienten bei der Einsteuerung kann eine Drossel 27 vorgesehen sein.

Die zuvor für die Anordnung nach Fig. 3 beschriebenen Testroutinen sind hierauf sinngemäss anzuwenden. Das gilt auch, wenn beispielsweise das Ventil 10a aus Fig. 4 als Proportionalventil ausgebildet ist, sowie für andere nicht dargestellte Modulatoranordnungen.

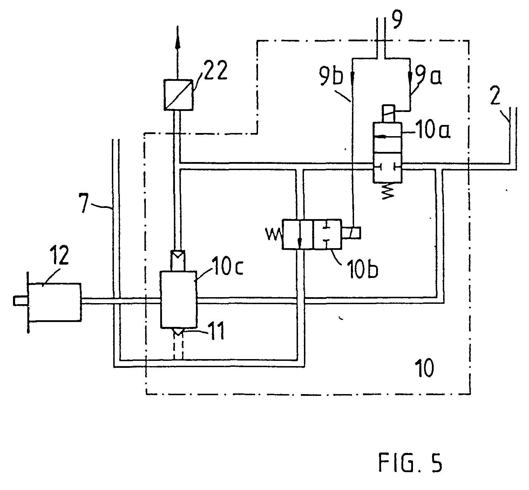

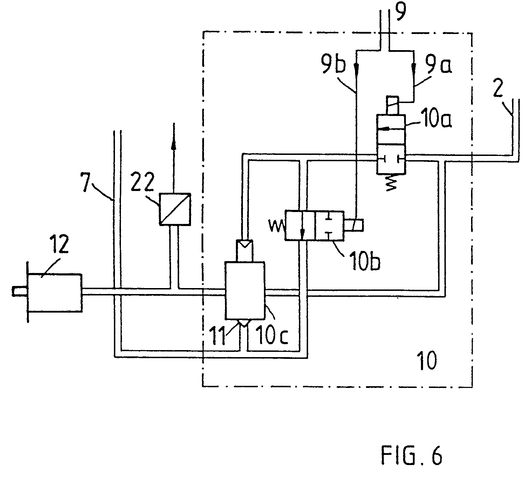

Die Fig. 5 und 6 zeigen als Ausschnitte der Fig. 1, 2 zwei beispielhafte Ausführungen des Magnetventils 10 (Modulator) mit Vorsteuerventilen.

Gemäss der Fig. 5 steuern die Magnetventile 10a, 10b entsprechend der Fig. 3 in an sich bekannter Weise ein Relaisventil 10c vor. Der Drucksensor 22 erfasst diesen Vorsteuerdruck und führt sein Signal der Elektronik 6 zu. Erfindungsgemäss wird hier im Gegensatz zu den Fig. 1 bis 3 der redundante Druck über die Leitung 7 dem Vorsteuerventil 10b und darüber dem Drucksensor 22 und der Relaissteuerkammer des Relaisventils 10c zugeführt. Dadurch sind nicht nur die obenbeschriebenen Testmöglichkeiten sinngemäss anzuwenden, sondern auch die vorteilhafte Relaiswirkung für den redundanten Kreis ausnutzbar. Zusätzlich kann der redundante Kreis (Leitung 7) auch an die Haupt-Entlüftung 11 des Relaisventils 10c angeschlossen werden.

Gemäss der Fig. 6 erfasst im Unterschied zu Fig. 5 der Drucksensor 22 nicht den Vorsteuerdruck, sondern den vom Relaisventil 10c ausgesteuerten Bremsdruck. Hier genügt an sich ein Anschliessen des redundanten Kreises an die Haupt-Entlüftung 11 des Relaisventils 10c, um die redundante Bremswirkung und die Überwachung durch den Drucksensor 22 sicherzustellen. Das zusätzliche Anschliessen des Vorsteuerventils 10b an die Leitung 7 ermöglicht ein Ausnutzen der Relaiswirkung für den redundanten Kreis und verbesserten den Regelkomfort bei Teilbremsungen.

Die Anordnungen nach Fig. 5, 6 sind sinngemäss anzuwenden bei Modulatoren, in denen statt eines Relaisventils 10c Membranventile oder andere vorgesteuerte Ventile eingesetzt werden.

## Patentansprüche

1. Elektrische Bremsanlage, insbesondere für Nutzfahrzeuge, bei welcher den Bremszylindern (12, 13) Magnetventile (10, 14) zur Steuerung des Bremsdruckes vorgeschaltet sind, welche Magnetventile über eine Elektronik (6) durch einen elektrischen Bremswertgeber (3) steuerbar sind, und wobei der Bremswertgeber (3) zusätzlich ein Trittplattenventil (5) zur Druckabstufung aufweist, dessen Eingang an einen Druckmittelvorrat (1) angeschlossen ist, dadurch gekennzeichnet, dass der Ausgang des Trittplattenventils (5) an den Entlüftungsanschluss (11, 15) der Magnetventile (10, 14) angeschlossen ist.

2. Bremsanlage nach Anspruch 1, dadurch gekennzeichnet, dass die Magnetventile (10, 14) aus Modulatoren bestehen, die aus Vorsteuerventilen (10b) und vorgesteuerten Hauptventilen (10c) aufgebaut sind, und dass der Ausgang des Trittplattenventils (5) an alle Entlüftungsanschlüsse der Modulatoren (10, 14) oder nur an die Entlüftungsanschlüsse (11, 15) der Hauptventile (10c) oder der Vorsteuerventile (10b) angeschlossen ist.

3. Bremsanlage nach Anspruch 1 oder 2, dadurch gekennzeichnet, dass die Anlage so ausgelegt ist, dass der von den Magnetventilen (10, 14) elektrisch ausgesteuerte Druck um einen definierten Wert grösser ist als der vom Trittplattenventil (5) abgestuft ausgesteuerte Druck.

4. Bremsanlage nach Anspruch 1 bis 3, mit einem zusätzlich installierten Antiblockiersystem, dadurch gekennzeichnet, dass in die Verbindungsleitung (7) zwischen dem Trittplattenventil (5) und den Entlüftungsanschlüssen (11, 15) der Magnetventile (10, 14) ein im Normalfall offenes Absperrventil (19) eingefügt ist.

5. Bremsanlage nach Anspruch 4 dadurch gekennzeichnet, dass das Absperrventil (19) als Magnetventil ausgebildet ist oder aus mehreren Magnetventilen besteht und im Fall einer vom Radschlupf und/oder von der lastabhängigen geregelten Bremsung, bei schnellem Bremslösen oder bei Retarderbremsungen durch die Elektronik (6) in die entlüftende Stellung umsteuerbar ist.

6. Bremsanlage nach einem oder mehreren der obengenannten Ansprüche mit einem oder mehreren Drucksensoren (22, 24) zur Rückmeldung und/oder Überwachung des elektro-pneumatisch geregelten Bremsdruckes, dadurch gekennzeichnet, dass der/die Drucksensoren (22, 24) auch zur Überwachung des redundanten Druckes vom Trittplattenventil (5) und/oder der Funktion des Absperrventils (19) herangezogen wird/werden.

7. Bremsanlage nach Anspruch 6, dadurch gekennzeichnet, dass durch spezielle Testroutinen bei oder nach einer Betätigung des Bremswertgebers (3) die Magnetventile (10, 14) kurzzeitig nicht angesteuert werden und die Drucksensoren (22, 24) den redundanten Druck des Trittplattenventils (5) messen.

8. Bremsanlage nach Anspruch 6 und 7, dadurch gekennzeichnet, dass in speziellen Testroutinen bei oder nach einer Betätigung des Bremswertgebers (3) das Absperrventil (19) kurzzeitig umgesteuert wird.

9. Bremsanlage nach Anspruch 6 bis 7, dadurch gekennzeichnet, dass die Elektronik (6) in speziellen Testroutinen die Messwerte der Drucksensoren (22, 24) und ihre Änderung auf Plausibilität prüft und gegebenenfalls Fehler zur Anzeige bringt.

## Claims

1. An electrical brake system, especially for commercial vehicles, in which electromagnetic valves (10, 14) for controlling the brake pressure are provided upstream of the brake cylinders (12, 13), which electromagnetic valves are controllable by way of an electronics unit (6) by an electrical brake value generator (3), and wherein the brake value generator (3) additionally has a pedal-operated valve (5) for pressure graduation, the input of which valve (5) is connected to a pressure medium supply (1), characterized in that the output of the pedal-operated valve (5) is connected to the venting port (11, 15) of the electromagnetic valves (10, 14).

2. A brake system according to claim 1, characterized in that the electromagnetic valves (10, 14) consist of modulators which are constructed from pilot valves (10b) and pilot-controlled main valves (10c), the output of the pedal-operated valve (5) is connected to all venting ports of the modulators (10, 14) or only to the venting ports (11, 15) of the main valves (10c) or of the pilot valves (10b).

3. A brake system according to claim 1 or 2, characterized in that the system is so designed that the pressure controlled electronically by the electromagnetic valves (10, 14) is greater by a defined value that the pressure controlled in a graduated manner by the pedal-operated valve (5).

4. A brake system according to claims 1 to 3 with an additionally installed anti-lock system, characterized in that in the connecting line (7) between the pedal-operated valve (5) and the venting ports (11, 15) of the electromagnetic valves (10, 14) there is inserted a shut-off valve (9) which is normally open.

5. A brake system according to claim 4, characterized in that the shut-off valve (19) is constructed as an electromagnetic valve or consists of several electromagnetic valves, and in the event of a braking action controlled by wheel slip and/or a braking action controlled in dependence on load, on rapid release of the brakes or in the event of retarder braking actions, can be changed over by the electronics unit (6) into the venting position.

6. A brake system according to one or more of the preceding claims, with one or more pressure sensors (22, 24) for reporting and/or monitoring the electro-pneumatically controlled brake pressure, characterized in that the pressure sensor/s (22, 24) is/are used also to monitor the standby pressure of the pedal-operated valve (5) and/or the function of the shut-off valve (19).

7. A brake system according to claim 6, characterized in that, by special test routines performed during or after an actuation of the brake value generator (3), the electromagnetic valves (10, 14) are briefly not controlled and the pressure sensors (22, 24) measure the standby pressure of the pedal-operated valve (5).

8. A brake system according to claim 6 and 7, characterized in that, in special test routines performed during or after an actuation of the brake value generator (3), the shut-off valve (19) is changed over briefly.

9. A brake system according to claims 6 to 8, characterized in that the electronics unit (6) tests the measured values of the pressures sensors (22, 24) and their change for plausibility in special test routines, and optionally indicates faults.

## Revendications

1. Installation de freinage à commande électrique, en particulier pour véhicules utilitaires, dans laquelle les cylindres de frein (12, 13) sont précédés d'électrovannes (10, 14) destinées au réglage de la pression de freinage et commandées à travers une électronique (6) par un générateur électrique d'effort de freinage (3), lequel présente en plus un robinet à pédale (5) pour la délivrance d'une pression dosée, l'entrée de ce robinet étant raccordée à un réservoir de fluide de pression (1), caractérisée en ce que la sortie du robinet à pédale (5) est raccordée à l'orifice de mise à l'échappement (11, 15) des électrovannes (10, 14).

2. Installation selon la revendication 1, caractérisée en ce que les électrovannes (10, 14) sont des modulateurs constitués de soupapes pilotes (10b) et de soupapes principales (10c) pilotées, et que la sortie du robinet à pedale (5) est raccordée à tous les orifices de mise à l'echappement des modulateurs (10, 14) ou seulement aux orifices de mise à l'échappement (11, 15) des soupapes principales (10c) ou des soupapes pilotes (10b).

3. Installation selon la revendication 1 ou 2, caractérisée en ce qu'elle est conçue de manière que la pression délivrée par les électrovannes (10, 14), pression qui est déterminée électriquement, soit supérieure d'une valeur définie à la pression dosée délivrée par le robinet à pédale (5).

4. Installation selon les revendications 1 à 3, comprenant un système antiblocage installé en plus, caractérisée en ce qu'une soupape d'arrêt (19), qui est normalement ouverte, est insérée dans le conduit de liaison (7) entre le robinet à pédale (5) et les orifices de mise à l'échappement (11, 15) des électrovannes (10, 14).

5. Installation selon la revendication 4, caractérisée en ce que la soupape d'arrêt (19) est réalisée comme une électrovanne ou est constituée de plusieurs électrovannes et peut être commutée à la position de mise à l'échappement par l'électronique (6) en cas de glissement des roues et/ou de réglage du freinage en fonction de la charge, lors d'un desserrage rapide du frein ou lors de freinages avec utilisation d'un ralentisseur.

6. Installation selon une ou plusieurs des revendications précédentes, comprenant un ou plusieurs capteurs de pression (22, 24) pour la signalisation en retour et/ou la surveillance d'une pression de freinage réglée par voie électropneumatique, caractérisé en ce que le ou les capteurs de pression (22, 24) est ou sont utilisé(s) aussi pour la surveillance de la pression redondante délivrée par le robinet à pédale (5) et/ou du fonctionnement de la soupape d'arrêt (19).

7. Installation selon la revendication 6, caractérisée en ce que, sous l'effet de routines de test particulières, pendant ou après un actionnement du générateur d'effort de freinage (3), les électrovannes (10, 14) ne sont pas commandées, brièvement, et les capteurs de pression (22, 24) mesurent la pression redondante délivrée par le robinet à pédale (5).

8. Installation selon les revendications 6 et 7, caractérisée en ce que la soupape d'arrêt (19) est brièvement commutée lors de routines de test particulières, pendant ou après un actionnement du générateur d'effort de freinage (3).

9. Installation selon les revendications 6 à 8, caractérisée en ce que l'électronique (6), lors de routines de test particulières, contrôle les valeurs mesurées par les capteurs de pression (22, 24) et le changement de ces valeurs sur leur vraisemblance et provoque éventuellement l'indication de défauts.

FIG.1

FIG.2

FIG. 3

FIG. 4

FIG. 5

FIG. 6